(19) **Europäisches Patentamt / European Patent Office / Office européen des brevets**

(11) **EP 4 474 444 A1**

(12) **EUROPEAN PATENT APPLICATION**
published in accordance with Art. 153(4) EPC

(43) Date of publication:
**11.12.2024 Bulletin 2024/50**

(21) Application number: **23749677.3**

(22) Date of filing: **27.01.2023**

(51) International Patent Classification (IPC):
**C09K 5/16** (2006.01)      **F28D 20/00** (2006.01)

(52) Cooperative Patent Classification (CPC):
**C09K 5/16; F28D 20/00;** Y02E 60/14

(86) International application number:
**PCT/JP2023/002559**

(87) International publication number:
**WO 2023/149361 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.02.2022 JP 2022013945**

(71) Applicants:
• **Shiraishi Central Laboratories Co. Ltd.**
**Amagasaki-shi, Hyogo 660-0085 (JP)**
• **Tokyo Institute of Technology**
**Tokyo 152-8550 (JP)**

(72) Inventors:
• **TAJIKA, Masahiko**
**Amagasaki City, Hyogo 660-0085 (JP)**

• **ABE, Yuka**
**Amagasaki City, Hyogo 660-0085 (JP)**
• **MATSUBARA, Kei**
**Osaka City, Osaka 530-0005 (JP)**
• **KATO, Yukitaka**
**Tokyo 152-8550 (JP)**
• **FUNAYAMA, Shigehiko**
**Tokyo 152-8550 (JP)**
• **KATO, Takashi**
**Tokyo 152-8550 (JP)**
• **TAMANO, Soichiro**
**Tokyo 152-8550 (JP)**
• **TAKASU, Hiroki**
**Tokyo 152-8550 (JP)**

(74) Representative: **Global IP Europe Patentanwaltskanzlei**
**Pfarrstraße 14**
**80538 München (DE)**

(54) **CALCIUM HYDROXIDE SLURRY FOR CHEMICAL HEAT STORAGE MATERIAL, METHOD FOR PRODUCING CALCIUM HYDROXIDE SLURRY FOR CHEMICAL HEAT STORAGE MATERIAL, CHEMICAL HEAT STORAGE MATERIAL, METHOD FOR PRODUCING CHEMICAL HEAT STORAGE MATERIAL, AND METHOD FOR PERFORMING CHEMICAL HEAT STORAGE**

(57) The present invention is intended to provide a calcium hydroxide slurry that is used for a chemical heat storage material, can be supported on a supporting substrate such as a heat exchanger substrate, and has a high concentration and an appropriate viscosity, a method for producing the calcium hydroxide slurry, a chemical heat storage material in which a calcium hydroxide is supported on a supporting substrate, a method for producing the chemical heat storage material, and a method for performing chemical heat storage of a chemical heat storage material. The present invention relates to a calcium hydroxide slurry that is used for a chemical heat storage material and has a calcium hydroxide solid content concentration of 50% by weight or more and a viscosity of 5,000 mPa s or less and to a method for producing the calcium hydroxide slurry. The present invention also relates to a chemical heat storage material in which a calcium hydroxide having a BET specific surface area of 7 to 30 $m^2$/g and a volume-based average particle size ($D_{50}$) of 5 to 20 $\mu$m as determined by laser diffraction particle size measurement is supported on a supporting substrate, to a method for producing the chemical heat storage material, and to a method for performing chemical heat storage.

Fig. 1

## Description

### FIELD

The present invention relates to a calcium hydroxide slurry used for a chemical heat storage material and a method for producing the calcium hydroxide slurry. The present invention further relates to a chemical heat storage material comprising the calcium hydroxide slurry, a method for producing the chemical heat storage material, and a method for performing chemical heat storage.

### BACKGROUND

Chemical heat storage materials using a reversible reaction of hydration exothermic reaction and dehydration endothermic reaction of chemical substances have been known. For example, calcium oxide generates heat when hydrated into calcium hydroxide, whereas calcium hydroxide absorbs heat when dehydrated into calcium oxide. Accordingly, calcium oxide is usable as a chemical heat storage material that can repeat heat dissipation and heat storage. A chemical heat storage material is packed in a heat exchanger or the like and transfers heat in and out. When an inorganic powder such as calcium oxide powder, which has a low thermal conductivity, is used as a chemical heat storage material, heat is difficult to recover where away from the heat exchanger, and the heat recovery efficiency is low unfortunately. In particular, the volume of calcium oxide powder increases at the time of hydration and decreases at the time of dehydration. As heat dissipation and heat storage are repeated, the calcium oxide powder pulverizes unfortunately. A powdery substance for a chemical heat storage material forms gaps at the time of packing and thus is insufficiently packed unfortunately.

To solve such problems as above, Patent Literature 1 discloses a pellet substance for a chemical heat storage material that has a higher thermal conductivity than the powdery substance for a chemical heat storage material and is easily handled. To improve the heat exchanger effectiveness of a heat exchange reactor, Patent Literature 2 discloses a heat exchange structure that comprises a layer containing a deliquescent substance on the surface of the heat exchange structure containing calcium oxide. Patent Literature 3 discloses a heat storage member that comprises a heat storage material in at least some of the voids of a substrate mainly containing a SiC sintered body and having a three-dimensional network structure.

CITATION LIST

PATENT LITERATURE

    Patent Literature 1: JP 2009-227772 A
    Patent Literature 2: JP 2012-127588 A
    Patent Literature 3: JP 2017-179306 A

### BRIEF SUMMARY

### TECHNICAL PROBLEM

The pellet-like chemical heat storage material in Patent Literature 1 is prevented from pulverizing due to repeated heat dissipation and heat storage, but water is unlikely to infiltrate thereinto. Hence, the chemical heat storage material may not provide the calorific value expected from the mass of an inorganic powder. In Patent Literature 2 or Patent Literature 3, it is difficult to form the layer of a chemical heat storage material on the surface of a heat exchange structure or the like.

The present invention is therefore intended to provide a calcium hydroxide slurry that is used for a chemical heat storage material, can be supported on a supporting substrate such as a heat exchanger substrate, and has a high concentration and an appropriate viscosity and a method for producing the calcium hydroxide slurry. The present invention is further intended to provide a chemical heat storage material in which calcium hydroxide is supported on a supporting substrate and a method for producing the chemical heat storage material.

### SOLUTION TO PROBLEM

A first aspect of the invention is a calcium hydroxide slurry used for a chemical heat storage material, the calcium hydroxide slurry having a calcium hydroxide solid content concentration of 50% by weight or more and a viscosity of 5,000 mPa·s or less.

It is preferable that the calcium hydroxide has a BET specific surface area of 7 to 30 $m^2/g$ and a volume-based average particle size ($D_{50}$) of 5 to 20 $\mu$m as determined by laser diffraction particle size measurement.

A second aspect of the invention is a method for producing a calcium hydroxide slurry used for a chemical heat storage material, the method comprising:

burning limestone to give calcium oxide;

reacting the calcium oxide with water to give a calcium hydroxide slurry;

adding a dispersant to the calcium hydroxide slurry at 0.01 to 10% by weight relative to a weight of the calcium hydroxide slurry; and

adjusting the calcium hydroxide slurry to have a calcium hydroxide solid content concentration of 50% by weight or more, wherein

a calcium hydroxide contained in the produced calcium hydroxide slurry has a BET specific surface area of 7 to 30 $m^2/g$ and a volume-based average particle size ($D_{50}$) of 5 to 20 $\mu$m as determined by laser diffraction particle size measurement.

It is preferable that the dispersant is selected from a polyacrylate polymer surfactant, a polycarboxylate polymer surfactant, an acrylic acid-maleic acid copolymer surfactant, an alkylsulfonic acid surfactant, a quaternary ammonium surfactant, a polyphosphate surfactant, and a mixture thereof.

A third aspect of the invention is a chemical heat storage material comprising:

a supporting substrate; and

a calcium hydroxide having a BET specific surface area of 7 to 30 $m^2/g$ and a volume-based average particle size ($D_{50}$) of 5 to 20 $\mu$m as determined by laser diffraction particle size measurement, wherein

the calcium hydroxide is supported on the supporting substrate.

It is preferable that the supporting substrate is a porous substrate containing a substance selected from the group consisting of silicon carbide, aluminum nitride, silicon nitride, boron nitride, magnesium oxide, aluminum oxide, beryllium oxide, and a mixture thereof.

A fourth aspect the invention is a method for producing a chemical heat storage material, the method comprising:

applying a calcium hydroxide slurry having a calcium hydroxide solid content concentration of 50% by weight or more and a viscosity of 5,000 mPa·s or less and used for a chemical heat storage material, to a supporting substrate having pores;

placing the supporting substrate in a reduced pressure environment at 0.1 MPa or less to infiltrate the calcium hydroxide slurry into the supporting substrate; and

drying the supporting substrate infiltrated with the calcium hydroxide slurry at 70 to 350°C.

It is preferable that the drying the supporting substrate infiltrated with the calcium hydroxide slurry is performed such that the supporting substrate has a pore porosity Y of 70% or less as defined by:

[Mathematical Equation 1]

$$Y = [1 - \{(B/C)/(A \times X/100)\}] \times 100$$

(where A [$cm^3$] is a bulk volume of the supporting substrate; B [g] is a weight of calcium hydroxide supported on the supporting substrate; C [$g/cm^3$] is a true density of calcium hydroxide; X [%] is a porosity of the supporting substrate; and Y [%] is a pore porosity of the supporting substrate coated with the calcium hydroxide slurry).

It is preferable that the drying the supporting substrate infiltrated with the calcium hydroxide slurry is performed at a pressure ranging from normal pressure to 0.001 MPa.

It is preferable that the calcium hydroxide has a BET specific surface area of 7 to 30 $m^2/g$ and a volume-based average particle size ($D_{50}$) of 5 to 20 $\mu$m as determined by laser diffraction particle size measurement.

A fifth aspect of the invention is a method for performing chemical heat storage, the method comprising:

heating a calcium hydroxide supported on a supporting substrate in a chemical heat storage material to convert the calcium hydroxide into calcium oxide, wherein

the heating is performed under reduced pressure.

It is preferable that the heating is performed at a temperature of more than 350°C and less than 600°C and at a pressure of not more than 100 kPa.

ADVANTAGEOUS EFFECTS

The present invention provides a calcium hydroxide slurry that can be supported on a supporting substrate such as a heat exchanger substrate and has a high concentration and an appropriate viscosity and provides a method for producing the calcium hydroxide slurry. The present invention further provides a chemical heat storage material in which calcium hydroxide is supported on a supporting substrate and provides a method for producing the chemical heat storage material.

BRIEF DESCRIPTION OF DRAWINGS

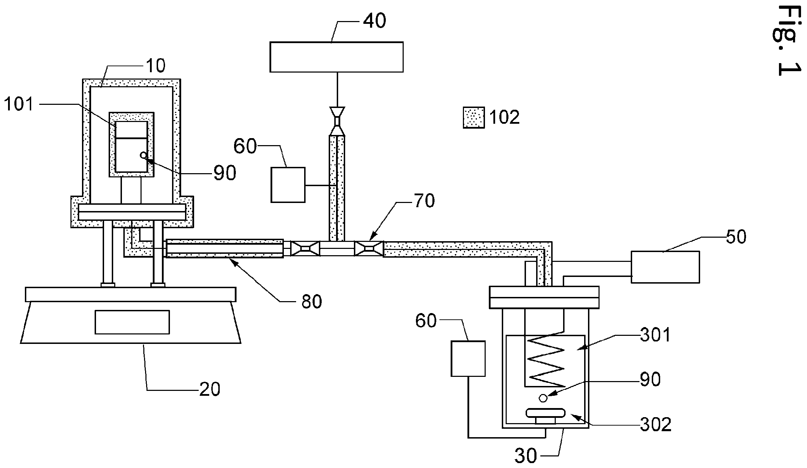

FIG. 1 is a view schematically showing an apparatus for determining the mass of water required for the hydration exothermic reaction of calcium oxide.

DETAILED DESCRIPTION

Embodiments of the present invention will be described in further detail, but the present invention is not limited to the following embodiments.

A first embodiment of the present invention is a calcium hydroxide slurry that has a calcium hydroxide solid content concentration of 50% by weight or more and a viscosity of 5,000 mPa·s or less and is used for a chemical heat storage material.

In the first embodiment, calcium hydroxide is a hydroxide of calcium represented by chemical formula $Ca(OH)_2$. Calcium hydroxide is generally called slaked lime, an aqueous calcium hydroxide solution is called lime water, and a calcium hydroxide suspension is called lime milk. Calcium hydroxide is dehydrated into calcium oxide (CaO, generally called quick lime) and absorbs heat during the reaction. Meanwhile, calcium oxide generates heat when comes into contact and reacts with water or water vapor into calcium hydroxide. The dehydration endothermic reaction of calcium hydroxide and the hydration exothermic reaction of calcium oxide are reversible. Such a reversible chemical reaction can be used as a chemical heat storage material.

As described above, the calcium hydroxide slurry in the first embodiment can be used for a chemical heat storage material. In the description, a chemical heat storage material means the member that can chemically perform heat dissipation and heat storage. Examples of the chemical heat storage material include a material using isopropanol (a combination of endothermic reaction in which heated isopropanol is decomposed into acetone and hydrogen and exothermic reaction in which acetone and hydrogen are reacted to form isopropanol) and a material using magnesium hydroxide (a combination of endothermic reaction in which magnesium hydroxide is dehydrated to form magnesium oxide and hydration exothermic reaction of magnesium oxide). The present description discloses a chemical heat storage material using the dehydration endothermic reaction (heat storage) and the hydration exothermic reaction (heat dissipation) of calcium hydroxide and calcium oxide. In the present description, a substance itself reversibly undergoing endothermic reaction and exothermic reaction and a mixture mainly containing the substance are called a substance for a chemical heat storage material (for example, "calcium hydroxide for a chemical heat storage material" or "a calcium hydroxide slurry for a chemical heat storage material"), a substance used for a chemical heat storage material (for example, "calcium hydroxide used for a chemical heat storage material" or "a calcium hydroxide slurry used for a chemical heat storage material"), or the like. In the present description, "used for a chemical heat storage material" includes the meaning of "used for producing a chemical heat storage material". A member in which a substance reversibly undergoing endothermic reaction and exothermic reaction is supported on a supporting substrate or the like or is packed in a casing or the like to make the heat stored in the substance usable is generally called a "chemical heat storage material".

The calcium hydroxide slurry in the first embodiment has a calcium hydroxide solid content concentration of 50% by weight or more. To use the slurry for a chemical heat storage material, the calcium hydroxide solid content concentration is preferably 55% by weight or more and more preferably 60% by weight or more. In the present description, the "solid content concentration" of an aqueous solution means the concentration of a solute dissolved in water, or the "solid content concentration" of a suspension or a dispersion liquid means the concentration of the total weight of a solute dissolved in water and a solute suspended or dispersed in water.

The calcium hydroxide slurry has a viscosity of 5,000 mPa·s or less. The viscosity of a calcium hydroxide slurry may be determined by using a rotational viscometer in accordance with "Methods for viscosity measurement of liquid" in Japanese Industrial Standards JIS Z 8803: 2011. To use the slurry for a chemical heat storage material, the calcium hydroxide slurry preferably has a viscosity of 4,000 mPa·s or less and more preferably 3,000 mPa·s or less.

The calcium hydroxide slurry in the first embodiment is characterized by having a high concentration but having a relatively low viscosity. Taking advantage of such properties, the calcium hydroxide slurry can be used for a chemical heat storage material.

In the description, the calcium hydroxide contained in the calcium hydroxide slurry in the first embodiment preferably has a BET specific surface area of 7 to 30 $m^2/g$. The BET specific surface area of a calcium hydroxide may be determined in accordance with "Determination of the specific surface area of powders (solids) by gas adsorption-BET method" in Japanese Industrial Standards JIS Z 8830. To use the calcium hydroxide slurry for a chemical heat storage material, the BET specific surface area is preferably 9 to 30 $m^2/g$ and more preferably 10 to 20 $m^2/g$.

The calcium hydroxide contained in the calcium hydroxide slurry in the first embodiment preferably has a volume-based average particle size ($D_{50}$) of 5 to 20 $\mu$m as determined by laser diffraction particle size measurement. The laser diffraction particle size measurement is also called a laser diffraction particle size distribution measurement method, and the measurement may be performed by using a laser diffraction particle size distribution analyzer. To use the calcium hydroxide slurry for a chemical heat storage material, the $D_{50}$ value is preferably 6 to 18 $\mu$m and more preferably 7 to 16 $\mu$m. The BET specific surface area and the $D_{50}$ value are each an indication of the particle size of calcium hydroxide. Using the calcium hydroxide having a particle size within the above range enables the production of a slurry having a high concentration and a low viscosity.

A second embodiment of the present invention is a method for producing a calcium hydroxide slurry. The method for producing a calcium hydroxide slurry in the embodiment comprises the following steps of: burning limestone to give calcium oxide; reacting the calcium oxide with water to give a calcium hydroxide slurry; adding a dispersant to the calcium hydroxide slurry at 0.01 to 10% by weight relative to the weight of the calcium hydroxide slurry; and adjusting the calcium hydroxide slurry to have a calcium hydroxide solid content concentration of 50% by weight or more. Through the steps, the calcium hydroxide contained in the finally produced calcium hydroxide slurry is characterized by having a BET specific surface area of 7 to 30 $m^2/g$ and having a volume-based average particle size ($D_{50}$) of 5 to 20 $\mu$m as determined by laser diffraction particle size measurement.

The method in the second embodiment comprises a first step of burning limestone to give calcium oxide. Limestone is the mineral ore name (or trade name) of calcium carbonate ($CaCO_3$). In other words, calcium carbonate may be used in place of the limestone in the step. Limestone is burned by heating at not less than a temperature at which calcium carbonate is pyrolyzed to discharge carbon dioxide or at not less than 825°C. Igniting limestone (or calcium carbonate) yields calcium oxide (CaO, quick lime). The prepared calcium oxide preferably has a BET specific surface area of 0.1 to 10 $m^2/g$ (as determined in accordance with "Determination of the specific surface area of powders (solids) by gas adsorption-BET method" in JIS Z 8830).

The method in the second embodiment comprises a next step of reacting the prepared calcium oxide with water to give a calcium hydroxide slurry. By adding water to calcium oxide, heat is generated, and a slurry of calcium hydroxide (slaked lime) is prepared. In the step, as the reaction between calcium oxide and water proceeds, heat is generated, and thus the reaction gradually proceeds without heating the reaction system. The calcium hydroxide slurry prepared in the step has a solid content concentration of about 10 to 30% by weight, 15 to 25% by weight, or around 20% by weight.

The method comprises a subsequent step of adding a dispersant to the prepared calcium hydroxide slurry such that the concentration is 0.01 to 10% by weight. The dispersant used in the step may be selected from a polyacrylate polymer surfactant, a polycarboxylate polymer surfactant, an acrylic acid-maleic acid copolymer surfactant, an alkylsulfonic acid surfactant, a quaternary ammonium surfactant, a polyphosphate surfactant, and mixtures thereof. By adding the dispersant to the calcium hydroxide slurry, the calcium hydroxide solid particles in the calcium hydroxide slurry can be uniformly dispersed in water. Accordingly, the calcium hydroxide slurry can have a lower viscosity and a higher stability.

The method comprises a next step of adjusting the calcium hydroxide slurry containing the dispersant to have a solid content concentration of 50% by weight or more. The solid content concentration of the calcium hydroxide slurry may be adjusted by controlling the amount of water specifically by evaporation, concentration, dehydration, or a similar method. As a calcium hydroxide slurry is concentrated to have a higher solid content concentration, the calcium hydroxide slurry would have a higher viscosity. However, even when the calcium hydroxide slurry to which an appropriate amount of a dispersant is added in the prior step is concentrated, a sudden increase in slurry viscosity is unlikely to be caused. Accordingly, the slurry can be adjusted to have a solid content concentration of 50% by weight or more. The calcium hydroxide solid content concentration can be preferably at 55% by weight or more and more preferably 60% by weight or more. The calcium hydroxide slurry prepared as above preferably has a viscosity of 5,000 mPa·s or less (as determined by using a rotational viscometer in accordance with "Methods for viscosity measurement of liquid" in JIS Z 8803: 2011). To use the slurry for a chemical heat storage material, the calcium hydroxide slurry preferably has a viscosity of 4,000 mPa·s or less and more preferably 3,000 mPa s or less.

The calcium hydroxide contained in the calcium hydroxide slurry finally produced by the method in the second embodiment preferably has a BET specific surface area of 7 to 30 $m^2/g$ (as determined in accordance with "Determination of the specific surface area of powders (solids) by gas adsorption-BET method" in JIS Z 8830). To use the calcium hydroxide slurry for a chemical heat storage material, the BET specific surface area is preferably 9 to 30 $m^2/g$ and more preferably 10 to 20 $m^2/g$. The calcium hydroxide contained in the calcium hydroxide slurry finally produced by the method in the second embodiment preferably has a volume-based average particle size ($D_{50}$) of 5 to 20 $\mu m$ as determined by laser diffraction particle size measurement. To use the calcium hydroxide slurry for a chemical heat storage material, the $D_{50}$ value is preferably 6 to 18 $\mu m$ and more preferably 7 to 16 $\mu m$. As described above, the BET specific surface area and the $D_{50}$ value are each an indication of the particle size of calcium hydroxide. By using the calcium hydroxide having a particle size within the above range, a slurry having a high concentration and a low viscosity can be provided.

The method in the second embodiment may comprise, after the step of reacting the calcium oxide with water to give a calcium hydroxide slurry, a step of subjecting the prepared slurry to evaporation, concentration, dehydration, or a similar method to increase the solid content concentration of the calcium hydroxide slurry. To the calcium hydroxide having a higher solid content concentration, a dispersant and water are preferably added such that the dispersant concentration is 0.01 to 10% by weight. When the calcium hydroxide slurry is once evaporated, concentrated, or dehydrated before adding a dispersant to the calcium hydroxide slurry, an increase in viscosity of the calcium hydroxide slurry can be more efficiently prevented in the final step of adjusting the calcium hydroxide slurry to have a solid content concentration of 50% by weight or more. The calcium hydroxide slurry produced in the above second embodiment can be suitably used particularly for a chemical heat storage material.

A third embodiment of the present invention is a chemical heat storage material comprising a supporting substrate and a calcium hydroxide having a BET specific surface area of 7 to 30 $m^2/g$ and a volume-based average particle size ($D_{50}$) of 5 to 20 $\mu m$ as determined by laser diffraction particle size measurement, and the calcium hydroxide is supported on the supporting substrate. The chemical heat storage material in the third embodiment is a member capable of chemically performing heat dissipation and heat storage and is specifically in the form in which calcium hydroxide is supported on a supporting substrate. In the embodiment, the supporting substrate is preferably a porous substrate containing a substance selected from the group consisting of silicon carbide, aluminum nitride, silicon nitride, boron nitride, magnesium oxide, aluminum oxide, beryllium oxide, and mixtures thereof. In the embodiment, the porous substrate means a substrate main body having pores (fine pores or holes). The porous substrate includes a microporous substrate, a mesoporous substrate, and a macroporous substrate depending on the pore size. In the third embodiment, any substrate may be used. The pores in the porous substrate may be independent pores or continuous pores. The calcium hydroxide to be supported on the supporting substrate has a BET specific surface area of 7 to 30 $m^2/g$ (as determined in accordance with "Determination of the specific surface area of powders (solids) by gas adsorption-BET method" in JIS Z8830). To use the calcium hydroxide for the chemical heat storage material, the BET specific surface area is preferably 9 to 30 $m^2/g$ and more preferably 10 to 20 $m^2/g$. The calcium hydroxide to be supported on the supporting substrate has a volume-based average particle size ($D_{50}$) of 5 to 20 $\mu m$ as determined by laser diffraction particle size measurement. To use the calcium hydroxide for the chemical heat storage material, the $D_{50}$ value is preferably 6 to 18 $\mu m$ and more preferably 7 to 16 $\mu m$. The calcium hydroxide supported on the supporting substrate may contain water at about 10 to 50% relative to the weight of the calcium hydroxide. The calcium hydroxide supported on the supporting substrate is dehydrated into calcium oxide and absorbs heat during the reaction. Meanwhile, calcium oxide comes into contact and reacts with water or water vapor into calcium hydroxide and generates heat during the reaction. The dehydration endothermic reaction of calcium hydroxide and the hydration exothermic reaction of calcium oxide are reversible. The third embodiment uses such reversible chemical reactions as a chemical heat storage material. The calcium hydroxide supported on the supporting substrate may be dehydrated, for example, by igniting the chemical heat storage material (at 400°C or more).

The chemical heat storage material in the third embodiment can reversibly repeat heat storage (dehydration endothermic reaction of calcium hydroxide) and heat generation (hydration exothermic reaction of calcium oxide). Examples of the apparatus for determining characteristics of the chemical heat storage material in the third embodiment include an apparatus equipped with an electronic balance as schematically shown in FIG. 1. The apparatus in FIG. 1 is for accurately weighing the mass of water required for heat generation of a chemical heat storage material. In FIG. 1, 10 is a reaction chamber; 101 is a chemical heat storage material; 102 is a heating region; 20 is an electronic balance; 30 is a water tank; 301 is water; 302 is a heater; 40 is a pump; 50 is a chiller; 60 is a pressure gauge; 70 is a valve; 80 is a flexible pipe; and 90 is a thermometer. The chemical heat storage material in the third embodiment is ignited as described above, and the calcium hydroxide supported on the chemical heat storage material is converted into calcium oxide (heat storage reaction). The heat-stored chemical heat storage material is placed in the reaction chamber 10. The inside of the water tank 30 is heated with the heater 302, and heated water vapor is generated. The heated water vapor passes through the heating region 102 and the valve 70 and is introduced into the reaction chamber 10 while the temperature does not decrease. In this manner, the heated water vapor is introduced into the reaction chamber 10 through the pipe 80 and comes into contact with the chemical heat storage material 101 placed in the reaction chamber 10. Upon contact, the calcium oxide in the heat-stored chemical heat storage material 101 reacts with the heated water vapor (generating heat). After the exothermic reaction of the calcium oxide in the chemical heat storage material 101 is completely finished, the mass of water required for the reaction of calcium oxide to calcium hydroxide is determined with the electronic balance 20. After the exothermic reaction of the calcium oxide in the chemical heat storage material 101 is finished, the inside or the reaction chamber 10 is heated. The calcium hydroxide in the chemical heat storage material 101 is dehydrated again and returns to calcium oxide. During the reaction, heat can be stored. As described above, the apparatus shown in FIG. 1 may be used to estimate the repeated use characteristics of the chemical heat storage material in the third embodiment.

A fourth embodiment of the present invention is a method for producing a chemical heat storage material. The method for producing a chemical heat storage material in the fourth embodiment comprises the following steps of:

applying a calcium hydroxide slurry having a calcium hydroxide solid content concentration of 50% by weight or more and a viscosity of 5,000 mPa·s or less and used for a chemical heat storage material, to a supporting substrate having pores;

placing the supporting substrate in a reduced pressure environment at 0.1 MPa or less to infiltrate the calcium hydroxide slurry into the supporting substrate; and

drying the supporting substrate infiltrated with the calcium hydroxide slurry in an environment at 70 to 350°C.

The method for producing a chemical heat storage material in the fourth embodiment is specifically a method for producing the chemical heat storage material in the third embodiment. The method for producing a chemical heat storage material in the fourth embodiment comprises a step of applying a calcium hydroxide slurry having a solid content concentration of 50% by weight or more and a viscosity of 5,000 mPa·s or less, to a supporting substrate having pores. The calcium hydroxide slurry to be applied to a supporting substrate has a calcium hydroxide solid content concentration of 50% by weight or more. To use the slurry for a chemical heat storage material, the calcium hydroxide solid content concentration is preferably 55% by weight or more and more preferably 60% by weight or more. The calcium hydroxide slurry has a viscosity of 5,000 mPa·s or less (as determined by using a rotational viscometer in accordance with "Methods for viscosity measurement of liquid" in JIS Z 8803: 2011). To use the slurry for a chemical heat storage material, the calcium hydroxide slurry preferably has a viscosity of 4,000 mPa·s or less and more preferably 3,000 mPa·s or less. The calcium hydroxide slurry to be applied to a supporting substrate in the step has a high concentration but has a relatively low viscosity. The calcium hydroxide slurry having a solid content concentration of 50% by weight or more and a viscosity of 5,000 mPa·s or less may be the above-described calcium hydroxide slurry in the first embodiment.

In the embodiment, the supporting substrate to which the calcium hydroxide slurry is applied is preferably a porous substrate containing a substance selected from the group consisting of silicon carbide, aluminum nitride, silicon nitride, boron nitride, magnesium oxide, aluminum oxide, beryllium oxide, and mixtures thereof. In the embodiment, the porous substrate means a substrate main body having pores (fine pores or holes). The porous substrate includes a microporous substrate, a mesoporous substrate, and a macroporous substrate depending on the pore size. In the fourth embodiment, any substrate may be used. The pores in the porous substrate may be independent pores or continuous pores. The supporting substrate is preferably formed in an approximately flat shape, such as a plate shape, a grid shape, or a mesh shape, capable of supporting calcium hydroxide. The calcium hydroxide to be supported on the supporting substrate has a BET specific surface area of 7 to 30 $m^2/g$ (as determined in accordance with "Determination of the specific surface area of powders (solids) by gas adsorption-BET method" in JIS Z 8830). To use the calcium hydroxide for the chemical heat storage material, the BET specific surface area is preferably 9 to 30 $m^2/g$ and more preferably 10 to 20 $m^2/g$. The calcium hydroxide to be supported on the supporting substrate has a volume-based average particle size ($D_{50}$) of 5 to 20 $\mu m$ as determined by laser diffraction particle size measurement. To use the calcium hydroxide for the chemical heat storage material, the $D_{50}$ value is preferably 6 to 18 $\mu m$ and more preferably 7 to 16 $\mu m$ .

The method for producing a chemical heat storage material in the fourth embodiment comprises a subsequent step of placing the supporting substrate coated with the calcium hydroxide slurry in a reduced pressure environment at 0.1 MPa or less to infiltrate the calcium hydroxide slurry into the supporting substrate. The supporting substrate coated with the calcium hydroxide slurry prepared in the prior step is placed in a reduced pressure environment. The reduced pressure environment may be prepared by a known method, for example, using a desiccator connected to a vacuum pump, evaporator, or a box dryer. The decompression degree may be 0.1 MPa or less and preferably 0.2 MPa or less. By placing the supporting substrate coated with the calcium hydroxide slurry in such a reduced pressure environment, the calcium hydroxide slurry is infiltrated into the supporting substrate. The supporting substrate is a porous substrate as described above, and thus the calcium hydroxide slurry enters into pores in the supporting substrate in a reduced pressure environment. The supporting substrate is preferably placed in a reduced pressure environment until the void volume reaches 75% or less, preferably 65 to 70% or less, after the calcium hydroxide slurry is infiltrated into pores in the supporting substrate. Depending on the size of the supporting substrate, the amount of the applied calcium hydroxide slurry, or the decompression degree, the supporting substrate is placed in a reduced pressure environment for 10 to 60 minutes, preferably for 20 to 60 minutes. The temperature in a reduced pressure environment is preferably room temperature to around -80°C.

The method for producing a chemical heat storage material in the fourth embodiment comprises a subsequent step of drying the supporting substrate infiltrated with the calcium hydroxide slurry in an environment at 70 to 350°C. The supporting substrate infiltrated with the calcium hydroxide slurry in the prior step is placed in an environment at 70 to 350°C.

Through the step, water in the calcium hydroxide slurry is removed, or the supporting substrate is dried. The temperature in the drying step is preferably within such a range that the calcium hydroxide or the supporting substrate is not chemically or physically changed, and is 70 to 350°C, preferably 100 to 320°C, and more preferably 120 to 300°C. The drying step may be performed in a reduced pressure environment (at around 0.1 MPa or less) as needed. By performing the drying step under reduced pressure, the prepared calcium hyrdoxide has a larger specific surface area. The time required for the drying step varies depending on the size of the supporting substrate, the amount of the infiltrated calcium hydroxide slurry, or the temperature but is roughly 1 to 24 hours and preferably 1 to 12 hours. In the step, water in the calcium hydroxide slurry may be completely removed but is not necessarily completely removed. For example, about 1 to 10% of water may be left relative to the weight of calcium hydroxide.

The step of drying the supporting substrate infiltrated with the calcium hydroxide slurry is preferably performed such that the supporting substrate has a pore porosity Y of 70% or less defined as follows:

[Mathematical Equation 2]

$$Y = [1 - \{(B/C)/(A \times X/100)\}] \times 100$$

(where A [cm$^3$] is the bulk volume of a supporting substrate; B [g] is the weight of calcium hydroxide supported on the supporting substrate; C [g/cm$^3$] is the true density of calcium hydroxide; X [%] is the porosity of the supporting substrate; and Y [%] is the pore porosity of the supporting substrate coated with a calcium hydroxide slurry).

In the equation, the B value is calculated by removing the weight of a dispersant and impurities from the weight of the solid remaining on a dried supporting substrate with a calcium hydroxide slurry (the dispersant and impurities are assumed to have a negligible volume). The C value is 2.2 [g/cm$^3$]. The porosity of a supporting substrate is the rate of the pore volume (in terms of [cm$^3$]) to the bulk volume (in terms of [cm$^3$]) of a supporting substrate and is expressed in %. The porosity of a supporting substrate may be determined by a known method such as a water immersion method. The pore porosity of a supporting substrate is a measure of the proportion of calcium hydroxide in the pores in a supporting substrate. A supporting substrate having a pore porosity of more than 70% means that a small amount of calcium hydroxide is supported on the supporting substrate, and may insufficiently function as the chemical heat storage material. The supporting substrate preferably has a porosity of 0% from the viewpoint of heat storage density, but the porosity is practically difficult to be 0%. The pore porosity of the supporting substrate can be reduced to about 65% or to about 40%.

As described above, a chemical heat storage material in which calcium hydroxide is supported on a supporting substrate can be produced. The calcium hydroxide supported on the supporting substrate is dehydrated into calcium oxide and absorbs heat during the reaction. Meanwhile, calcium oxide comes into contact and reacts with water or water vapor into calcium hydroxide and generates heat during the reaction. The dehydration endothermic reaction of calcium hydroxide and the hydration exothermic reaction of calcium oxide are reversible. The fourth embodiment is a method for producing a chemical heat storage material using such reversible chemical reactions.

A fifth embodiment is a method for performing chemical heat storage. The method comprises heating a calcium hydroxide supported on a supporting substrate in a chemical heat storage material to convert the calcium hydroxide into calcium oxide, and the heating is performed under reduced pressure. In the fourth embodiment, a chemical heat storage material in which calcium hydroxide is supported is produced. By heating the calcium hydroxide supported in the chemical heat storage material, the calcium hydroxide is dehydrated into calcium oxide. The chemical reaction is an endothermic reaction, and the chemical heat storage material can chemically store heat. The heating may be performed under reduced pressure. Under reduced pressure means an atmosphere at a pressure lower than atmospheric pressure. The heating may be performed at a pressure of 100 kPa or less and preferably at a pressure of 10 kPa or more and 50 kPa or less. The heating may be performed at a temperature of more than 350°C and less than 600°C and preferably 400°C or more and 550°C or less. If the heating is performed at an excessively low temperature, calcium hydroxide is inefficiently dehydrated, whereas if the heating is performed at an excessively high temperature, the resulting calcium oxide sinters to result in lower reactivity with water.

When the chemical heat storage material is heated under reduced pressure according to the fifth embodiment, the resulting calcium oxide has a larger specific surface area than that of a calcium oxide prepared by heating under normal pressure. Accordingly, a chemical heat storage material having higher reactivity with water or water vapor can be produced.

The method in the fifth embodiment in which a chemical heat storage material is subjected to chemical heat storage under reduced pressure may be applied to the first chemical heat storage when the chemical heat storage material is repeatedly used. When a chemical heat storage material is repeatedly used, the heating temperature during the first chemical heat storage may be the same as or different from the heating temperature during the second and subsequent chemical heat storage.

Examples

Examples of the present invention will next be specifically described. Without departing from the scope, the present invention is not limited to the following examples.

[Preparation of calcium hydroxide slurry]

[Example 1]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 22.4 kg of water was added for hydration, and a calcium hydroxide slurry having a solid content concentration of about 26.5% was prepared. The calcium hydroxide slurry was dehydrated with a pressure filter to adjust the solid content concentration to about 68%.

To the prepared calcium hydroxide slurry, 130 g of ARON T-50 (Toagosei Co., Ltd.) was next added as a dispersant. Water was appropriately added to adjust the solid content concentration to 53%, and a calcium hydroxide slurry was prepared. The slurry had a viscosity of 2,800 mPa·s, and the calcium hydroxide had an average particle size of 18.9 $\mu$m and a BET specific surface area of 18.2 $m^2$/g.

In examples, the viscosity of a calcium hydroxide slurry was determined by using a rotational viscometer in accordance with "Methods for viscosity measurement of liquid" in Japanese Industrial Standards JIS Z 8803: 2011; the average particle size ($D_{50}$) of a calcium hydroxide was the volume-based average particle size as determined by laser diffraction particle size measurement; and the BET specific surface area was determined in accordance with "Determination of the specific surface area of powders (solids) by gas adsorption-BET method" in JIS Z 8830.

[Example 2]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 28 kg of water was added for hydration, and a calcium hydroxide slurry having a solid content concentration of about 22% was prepared. The calcium hydroxide slurry was dehydrated with a pressure filter to adjust the solid content concentration to about 67.5%.

To the prepared calcium hydroxide slurry, 270 g of ARON T-50 (Toagosei Co., Ltd.) was next added as a dispersant. Water was appropriately added to adjust the solid content concentration to 62.9%, and a calcium hydroxide slurry was prepared. The slurry had a viscosity of 1,100 mPa·s, and the calcium hydroxide had an average particle size of 11.1 $\mu$m and a BET specific surface area of 12.4 $m^2$/g.

[Example 3]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 22.4 g of water was added for hydration, and a calcium hydroxide slurry having a solid content concentration of about 26.5% was prepared. The calcium hydroxide slurry was dehydrated with a pressure filter to adjust the solid content concentration to about 67.5%.

To the prepared calcium hydroxide slurry, 185 g of ARON T-50 (Toagosei Co., Ltd.) was next added as a dispersant. Water was appropriately added to adjust the solid content concentration to 63.1%, and a calcium hydroxide slurry was prepared. The slurry had a viscosity of 1,900 mPa·s, and the calcium hydroxide had an average particle size of 16.5 $\mu$m and a BET specific surface area of 15.8 $m^2$/g.

[Example 4]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 28 kg of water was added for hydration, and a calcium hydroxide slurry having a solid content concentration of about 22% was prepared. The calcium hydroxide slurry was dehydrated with a pressure filter to adjust the solid content concentration to about 68%.

To the prepared calcium hydroxide slurry, 130 g of POISE 530 (Kao Corporation) was next added as a dispersant. Water was appropriately added to adjust the solid content concentration to 58.0%, and a calcium hydroxide slurry was prepared. The slurry had a viscosity of 2,900 mPa·s, and the calcium hydroxide had an average particle size of 9.9 $\mu$m and a BET specific surface area of 10.7 $m^2$/g.

[Example 5]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 22.4 kg of water was added for hydration, and a calcium hydroxide slurry having a solid content concentration of about 22% was prepared. The calcium hydroxide slurry was dehydrated with a pressure filter to adjust the solid content concentration to about 65.5%.

To the prepared calcium hydroxide slurry, 370 g of POISE 530 (Kao Corporation) was next added as a dispersant. Water was appropriately added to adjust the solid content concentration to 60.3%, and a calcium hydroxide slurry was prepared. The slurry had a viscosity of 900 mPa s, and the calcium hydroxide had an average particle size of 9.8 $\mu$m and a BET specific surface area of 23.9 m$^2$/g.

[Comparative Example 1]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 56.0 kg of water was added for hydration, and a calcium hydroxide slurry having a solid content concentration of about 12% was prepared. The calcium hydroxide slurry was dehydrated with a pressure filter to adjust the solid content concentration to about 25%.

To the prepared calcium hydroxide slurry, 370 g of ARON T-50 (Toagosei Co., Ltd.) was next added as a dispersant. Water was appropriately added to adjust the solid content concentration to 9.4%, and a calcium hydroxide slurry was prepared. The slurry had a viscosity of 230 mPa·s, and the calcium hydroxide had an average particle size of 17.1 $\mu$m and a BET specific surface area of 10.2 m$^2$/g.

[Comparative Example 2]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 44.8 kg of water was added for hydration, and a calcium hydroxide slurry having a solid content concentration of about 18% was prepared. The calcium hydroxide slurry was dehydrated with a pressure filter to adjust the solid content concentration to about 29%.

To the prepared calcium hydroxide slurry, 280 g of ARON T-50 (Toagosei Co., Ltd.) was next added as a dispersant. Water was appropriately added to adjust the solid content concentration to 19.2%, and a calcium hydroxide slurry was prepared. The slurry had a viscosity of 760 mPa s, and the calcium hydroxide had an average particle size of 4.9 $\mu$m and a BET specific surface area of 12.0 m$^2$/g.

[Comparative Example 3]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 28 kg of water was added for hydration, and a calcium hydroxide slurry having a solid content concentration of about 22.0% was prepared. The calcium hydroxide slurry was dehydrated with a pressure filter to adjust the solid content concentration to about 44%.

To the prepared calcium hydroxide slurry, 500 g of ARON T-50 (Toagosei Co., Ltd.) was next added as a dispersant. Water was appropriately added to adjust the solid content concentration to 38.7%, and a calcium hydroxide slurry was prepared. The slurry had a viscosity of 400 mPa s, and the calcium hydroxide had an average particle size of 12.7 $\mu$m and a BET specific surface area of 21.7 m$^2$/g.

[Comparative Example 4]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 28 kg of water was added for hydration, and a calcium hydroxide slurry having a solid content concentration of about 22% was prepared. The calcium hydroxide slurry was dehydrated with a pressure filter to adjust the solid content concentration to about 38%.

To the prepared calcium hydroxide slurry, 92.5 g of ARON T-50 (Toagosei Co., Ltd.) was next added as a dispersant. Water was appropriately added to adjust the solid content concentration to 56.1%, and a calcium hydroxide slurry was prepared. The slurry had a viscosity of 9,900 mPa s, and the calcium hydroxide had an average particle size of 12.7 $\mu$m and a BET specific surface area of 21.7 m$^2$/g.

[Comparative Example 5]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 28 kg of water was added for hydration, and a calcium hydroxide slurry having a solid content concentration of about 22% was prepared. The calcium hydroxide slurry was dehydrated with a pressure filter to adjust the solid content concentration to about 65%.

To the prepared calcium hydroxide slurry, 185 g of ARON T-50 (Toagosei Co., Ltd.) was next added as a dispersant. Water was appropriately added to adjust the solid content concentration to 59.0%, and a calcium hydroxide slurry was prepared. The slurry had a viscosity of 6,700 mPa·s, and the calcium hydroxide had an average particle size of 4.9 μm and a BET specific surface area of 12.0 m$^2$/g.

[Comparative Example 6]

First, 10 kg of limestone (Shiraishi Kogyo Kaisha, Ltd.) was prepared. The limestone was burned in a reaction tank at 1,000°C to give 5.6 kg of calcium oxide. To the prepared calcium oxide, 28 kg of water was added for hydration, and a calcium hydroxide slurry having a solid content concentration of about 22% was prepared. The calcium hydroxide slurry was dehydrated with a pressure filter to adjust the solid content concentration to about 60%.

To the prepared calcium hydroxide slurry, 370 g of ARON T-50 (Toagosei Co., Ltd.) was next added as a dispersant. Water was appropriately added to adjust the solid content concentration to 28.9%, and a calcium hydroxide slurry was prepared. The slurry had a viscosity of 5,200 mPa·s, and the calcium hydroxide had an average particle size of 11.1 μm and a BET specific surface area of 32.5 m$^2$/g.

[Production of chemical heat storage material]

Each calcium hydroxide slurry prepared in Example 1 to Example 5 and Comparative Example 1 to Comparative Example 6 was used to produce a chemical heat storage material.

As the supporting substrate, a porous material (NGK INSULATORS, LTD.) having dimensions of 0.5 cm × 0.5 cm (an area of 0.25 cm$^2$) was prepared. To the supporting substrate, about 180 mg of each calcium hydroxide slurry was applied. The calcium hydroxide slurry was applied by a vacuum impregnation method. The supporting substrate coated with the calcium hydroxide slurry was placed in a desiccator and was allowed to stand for 1 hour while the pressure was adjusted to about 0.005 MPa with a vacuum pump, and the calcium hydroxide slurry was infiltrated into the supporting substrate. Next, the supporting substrate was placed in an oven and was dried at a temperature of 120°C for 12 hours or more, and a chemical heat storage material was produced. The pore porosity [%] of the produced chemical heat storage material was calculated in accordance with the equation:

[Mathematical Equation 3]

$$Y = [1 - \{(B/C)/(A \times X/100)\}] \times 100$$

(where A [cm$^3$] is the bulk volume of a supporting substrate; B [g] is the weight of calcium hydroxide supported on the supporting substrate; C [g/cm$^3$] is the true density of calcium hydroxide; X [%] is the porosity of the supporting substrate; and Y [%] is the pore porosity of the supporting substrate coated with a calcium hydroxide slurry).

[Evaluation of chemical heat storage material]

The chemical heat storage materials produced by using the calcium hydroxide slurries in Example 1 to Example 5 and Comparative Example 1 to Comparative Example 6 were evaluated in terms of pore porosity Y in accordance with the following criteria. Evaluation:

$$Y \leq 65\%:$$

good

$$65\% < Y \leq 75\%:$$

fair

$$75\% < Y:$$

poor

The chemical heat storage materials produced by using the calcium hydroxide slurries in Example 1 to Example 5 and Comparative Example 1 to Comparative Example 6 were summarized in Tables.

[Table 1]

| Table 1: Calcium hydroxide slurries and evaluation of chemical heat storage materials (Examples) | | | | | | |
|---|---|---|---|---|---|---|
|  | unit | Example 1 | Example 2 | Example 3 | Example 4 | Example 5 |
| Solid content | % by weight | 53.0 | 62.9 | 63.1 | 58.0 | 60.3 |
| Viscosity | mPa·s | 2800 | 1100 | 1900 | 2900 | 900 |
| Average particle size | $\mu$m | 18.9 | 11.1 | 16.5 | 9.9 | 9.8 |
| BET specific surface area | $m^2$/g | 18.2 | 12.4 | 15.8 | 10.7 | 23.9 |
| Pore porosity | % | 66 | 61 | 63 | 69 | 70 |
| Evaluation |  | fair | good | good | fair | fair |

[Table 2]

| Table 2: Calcium hydroxide slurries and evaluation of chemical heat storage materials (Comparative Examples) | | | | | | |
|---|---|---|---|---|---|---|
|  | unit | Comparative Example 1 | Comparative Example 2 | Comparative Example 3 | Comparative Example 4 | Comparative Example 5 | Comparative Example 6 |
| Solid content | % by weight | 9.4 | 19.2 | 38.7 | 56.1 | 59.0 | 28.9 |
| Viscosity | mPa·s | 230 | 760 | 400 | 9900 | 6700 | 5200 |
| Average particle size | $\mu$m | 17.1 | 4.9 | 12.7 | 22.6 | 4.9 | 11.1 |
| BET specific surface area | $m^2$/g | 10.2 | 12.0 | 21.7 | 10.8 | 12.0 | 32.5 |
| Pore porosity | % | 84 | 81 | 78 | 80 | 82 | 89 |
| Evaluation |  | poor | poor | poor | poor | poor | poor |

[Chemical heat storage under reduced pressure]

The calcium hydroxide slurry prepared in Example 2 was used to produce a chemical heat storage material as described below.

As the supporting substrate, a porous material (NGK INSULATORS, LTD.) having dimensions of 0.5 cm × 0.5 cm (an area of 0.25 $cm^2$) was prepared. To the supporting substrate, about 180 mg of the calcium hydroxide slurry was applied. The calcium hydroxide slurry was applied by a vacuum impregnation method. The supporting substrate coated with the calcium hydroxide slurry was placed in a desiccator and was allowed to stand for 1 hour while the pressure was adjusted to about 0.005 MPa with a vacuum pump, and the calcium hydroxide slurry was infiltrated into the supporting substrate. The supporting substrate was next placed in an oven and was dried for 12 hours or more, and a chemical heat storage material was produced.

The produced chemical heat storage material was next integrated into the reaction chamber of the apparatus in FIG. 1 and was subjected to chemical heat storage at pressures and temperatures in Table 3 (reaction of calcium hydroxide to calcium oxide). Next, heated water vapor was introduced to the reaction chamber. The mass of water required in the reaction of the calcium oxide in the chemical heat storage material with water into calcium hydroxide was weighed with a thermobalance.

After the calcium oxide in the chemical heat storage material was reacted with water vapor into calcium hydroxide, the chemical heat storage material was heated at a temperature of 400°C or more and a pressure of 5 kPa, and the calcium hydroxide was converted into calcium oxide. Heated water vapor was next introduced into the reaction chamber and was reacted with the calcium oxide to give calcium hydroxide. The above operation of converting calcium hydroxide into calcium oxide (heat storage) and then returning calcium oxide to calcium hydroxide by using heated water vapor (heat generation) was repeated nine times, and accordingly heat storage and heat generation were performed 10 times in total. The mass of water required for each exothermic reaction was determined.

The mass of water capable reacting was calculated from the mass of the supported calcium oxide as a theoretical value, and the theoretical value was compared with the mass of water required for the tenth exothermic reaction. A chemical heat storage material having a mass decrease rate of not less than 10% to the theoretical value was evaluated as "poor", and a chemical heat storage material having a mass decrease rate of less than 10% to the theoretical value was evaluated as "fair".

[Table 3]

Table 3: Temperatures and pressures in initial heat treatment of chemical heat storage (chemical heat storage material produced in Example 2)

| | | Temperature (°C) | | | | | |
|---|---|---|---|---|---|---|---|
| | | 300 | 360 | 400 | 500 | 550 | 650 |
| Pressure [kPa] | 100 | poor | fair | fair | fair | fair | poor |
| | 50 | poor | fair | fair | fair | fair | poor |
| | 20 | poor | fair | fair | fair | fair | poor |
| | 5 | poor | fair | fair | fair | fair | poor |
| | 0.2 | poor | fair | fair | fair | fair | poor |
| | 0.01 | poor | fair | fair | fair | fair | poor |

Each calcium hydroxide slurry prepared in Examples enabled the production of a chemical heat storage material having a good pore porosity Y In contrast, each calcium hydroxide slurry prepared in Comparative Examples was difficult to produce a chemical heat storage material having an appropriate pore porosity Y

The chemical heat storage material produced by using each calcium hydroxide slurry prepared in Examples was able to repeat chemical heat storage and heat generation. When chemical heat storage is performed by heating under reduced pressure, a calcium oxide having a high specific surface area can be prepared, resulting in a chemical heat storage material having high reactivity with water and enabling efficient heat generation.

**Claims**

1. A calcium hydroxide slurry used for a chemical heat storage material, the calcium hydroxide slurry having a calcium hydroxide solid content concentration of 50% by weight or more and a viscosity of 5,000 mPa·s or less.

2. The calcium hydroxide slurry according to claim 1, wherein the calcium hydroxide has a BET specific surface area of 7 to 30 $m^2/g$ and a volume-based average particle size ($D_{50}$) of 5 to 20 $\mu$m as determined by laser diffraction particle size measurement.

3. A method for producing a calcium hydroxide slurry used for a chemical heat storage material, the method comprising:

   burning limestone to give calcium oxide;
   reacting the calcium oxide with water to give a calcium hydroxide slurry;
   adding a dispersant to the calcium hydroxide slurry at 0.01 to 10% by weight relative to a weight of the calcium hydroxide slurry; and
   adjusting the calcium hydroxide slurry to have a calcium hydroxide solid content concentration of 50% by weight or more, wherein
   a calcium hydroxide contained in the produced calcium hydroxide slurry has a BET specific surface area of 7 to 30 $m^2/g$ and a volume-based average particle size ($D_{50}$) of 5 to 20 $\mu$m as determined by laser diffraction particle size measurement.

4. The for producing a calcium hydroxide slurry according to claim 3, wherein the dispersant is selected from a polyacrylate polymer surfactant, a polycarboxylate polymer surfactant, an acrylic acid-maleic acid copolymer surfactant, an alkylsulfonic acid surfactant, a quaternary ammonium surfactant, a polyphosphate surfactant, and a mixture thereof.

5. A chemical heat storage material comprising:

a supporting substrate; and
a calcium hydroxide having a BET specific surface area of 7 to 30 m$^2$/g and a volume-based average particle size (D$_{50}$) of 5 to 20 $\mu$m as determined by laser diffraction particle size measurement, wherein
the calcium hydroxide is supported on the supporting substrate.

6. The chemical heat storage material according to claim 5, wherein the supporting substrate is a porous substrate containing a substance selected from the group consisting of silicon carbide, aluminum nitride, silicon nitride, boron nitride, magnesium oxide, aluminum oxide, beryllium oxide, and a mixture thereof.

7. A method for producing a chemical heat storage material, the method comprising:

applying a calcium hydroxide slurry having a calcium hydroxide solid content concentration of 50% by weight or more and a viscosity of 5,000 mPa·s or less and used for a chemical heat storage material, to a supporting substrate having pores;
placing the supporting substrate in a reduced pressure environment at 0.1 MPa or less to infiltrate the calcium hydroxide slurry into the supporting substrate; and
drying the supporting substrate infiltrated with the calcium hydroxide slurry at 70 to 350°C.

8. The method for producing a chemical heat storage material according to claim 7, wherein the drying the supporting substrate infiltrated with the calcium hydroxide slurry is performed such that the supporting substrate has a pore porosity Y of 70% or less as defined by:

[Mathematical Equation 1]

$$Y = [1 - \{(B/C)/(A \times X/100)\}] \times 100$$

(where A [cm$^3$] is a bulk volume of the supporting substrate; B [g] is a weight of calcium hydroxide supported on the supporting substrate; C [g/cm$^3$] is a true density of calcium hydroxide; X [%] is a porosity of the supporting substrate; and Y [%] is a pore porosity of the supporting substrate coated with the calcium hydroxide slurry).

9. The method for producing a chemical heat storage material according to claim 7 or 8, wherein the drying the supporting substrate infiltrated with the calcium hydroxide slurry is performed at a pressure ranging from normal pressure to 0.001 MPa.

10. The method for producing a chemical heat storage material according to claim 7 or 8, wherein the calcium hydroxide has a BET specific surface area of 7 to 30 m$^2$/g and a volume-based average particle size (D$_{50}$) of 5 to 20 $\mu$m as determined by laser diffraction particle size measurement.

11. The method for producing a chemical heat storage material according to claim 9, wherein the calcium hydroxide has a BET specific surface area of 7 to 30 m$^2$/g and a volume-based average particle size (D$_{50}$) of 5 to 20 $\mu$m as determined by laser diffraction particle size measurement.

12. A method for performing chemical heat storage, the method comprising:

heating a calcium hydroxide supported on a supporting substrate in a chemical heat storage material to convert the calcium hydroxide into calcium oxide, wherein
the heating is performed under reduced pressure.

13. The method for performing chemical heat storage according to claim 12, wherein the heating is performed at a temperature of more than 350°C and less than 600°C and at a pressure of not more than 100 kPa.

# Fig. 1

## INTERNATIONAL SEARCH REPORT

International application No.

**PCT/JP2023/002559**

### A. CLASSIFICATION OF SUBJECT MATTER

***C09K 5/16***(2006.01)i; ***F28D 20/00***(2006.01)i
FI: C09K5/16; F28D20/00 G

According to International Patent Classification (IPC) or to both national classification and IPC

### B. FIELDS SEARCHED

Minimum documentation searched (classification system followed by classification symbols)

C09K5/16; F28D20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | CN 102732231 A (GUANGZHOU INSTITUTE OF ENERGY CONVERSION, CHINESE ACADEMY OF SCIENCES) 17 October 2012 (2012-10-17) <br> claims 1-10 | 1-13 |
| A | US 4054126 A (ROCKWELL INTERNATIONAL CORPORATION) 18 October 1977 (1977-10-18) <br> claims 1-10 | 1-13 |
| A | JP 2016-102137 A (UNIV NIHON) 02 June 2016 (2016-06-02) <br> claims 1-3 | 1-13 |
| A | JP 2011-162746 A (NAGOYA ELECTRICAL EDUCATIONAL FOUNDATION) 25 August 2011 (2011-08-25) <br> claims 1-8 | 1-13 |
| A | JP 2009-221289 A (TOYOTA CENTRAL R&D LABS INC) 01 October 2009 (2009-10-01) <br> claims 1-40 | 1-13 |
| A | CN 105423791 A (SHANGHAI JIAO TONG UNIVERSITY) 23 March 2016 (2016-03-23) <br> claims 1-6 | 1-13 |

☑ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **31 March 2023** | **11 April 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**17**

**INTERNATIONAL SEARCH REPORT**

International application No.

**PCT/JP2023/002559**

C. DOCUMENTS CONSIDERED TO BE RELEVANT

| Category* | Citation of document, with indication, where appropriate, of the relevant passages | Relevant to claim No. |
|---|---|---|
| A | CN 102757771 A (GUANGZHOU INSTITUTE OF ENERGY CONVERSION, CHINESE ACADEMY OF SCIENCES) 31 October 2012 (2012-10-31)<br>claims 1-7 | 1-13 |

Form PCT/ISA/210 (second sheet) (January 2015)

**INTERNATIONAL SEARCH REPORT**
Information on patent family members

International application No.

**PCT/JP2023/002559**

| Patent document cited in search report | | | Publication date (day/month/year) | Patent family member(s) | Publication date (day/month/year) |
|---|---|---|---|---|---|
| CN | 102732231 | A | 17 October 2012 | (Family: none) | |
| US | 4054126 | A | 18 October 1977 | (Family: none) | |
| JP | 2016-102137 | A | 02 June 2016 | (Family: none) | |
| JP | 2011-162746 | A | 25 August 2011 | (Family: none) | |
| JP | 2009-221289 | A | 01 October 2009 | (Family: none) | |
| CN | 105423791 | A | 23 March 2016 | (Family: none) | |
| CN | 102757771 | A | 31 October 2012 | (Family: none) | |

Form PCT/ISA/210 (patent family annex) (January 2015)

**EP 4 474 444 A1**

**Patent documents cited in the description**

- JP 2009227772 A
- JP 2012127588 A
- JP 2017179306 A